# EUROPEAN PATENT APPLICATION

(11) **EP 1 811 627 A1**
(43) Date of publication of application: **25.07.2007**
(21) Application number: 05781775.1
(22) Date of filing: 29.08.2005
(51) Int. Cl.: H02H 11/00

(54) **A SHORT CIRCUIT BREAKER WITHOUT ELECTRIC CONTACT**

(30) Priority: 21.10.2004 CN 200410051895
(71) Applicant: South China Engineering & Manufacture Ltd, Hong Kong (CN)
(72) Inventor: CHUNG, Yuecheung Room 102, Building 103, Bai, Guangdong 510515 (CN)
(74) Representative: Sierzputowska, Iwona
(86) International application number: PCT/CN2005/001340
(87) International publication number: WO 2006/042450

(57) **Abstract**

A no-current-contact electric shock prevention residual current circuit breaker comprises a digital logic microcontroller A, a fault sensor circuit B, an electromagnetic trip circuit C, a low voltage supply circuit D, a ground line circuit PE, and set of corresponding members F etc. The breaker is controlled by the digital logic microcontroller and provides intellective and previous protections from the leakage current and the faults as well as avoiding electric shock. The fault sensor circuit include that under a controlled circuit is not connected to the ground line, the ground line or the neutral line is hot, the neutral line is connected wrongly with the phase lines, and the single phase is wrongly connected with the two phases.

## Description

### FIELD OF THE INVENTION

The present invention relates generally to an electric shock prevention residual current circuit breaker. More particularly, the present invention relates to a no-current-contact electric shock prevention residual current circuit breaker that is controlled by a digital logic microcontroller and can protect against current leakage, overcurrent and short circuit. In addition, this no-current-contact electric shock prevention residual current circuit breaker is designed to provide new, intelligent protection and protection in advance of actual contact with an electric current, against electrical accidents such as electric shock and electrical fire that may likely lead to bodily injuries and fatalities, and that are caused by disconnected ground lines (due to loose or broken connections) under a controlled circuit, and by a hot ground line or a hot neutral line, a neutral line misconnected with the phase lines, a single phase misconnected with the two phases, and over voltage, and it can essentially eliminate indirect electric shocks to persons and electrical fires.

### BACKGROUND OF THE INVENTION

In comparison with similar models of current residual current circuit breakers in the world, the present invention consumes less power, has a slightly higher manufacturing cost, but is no larger in size.

The current residual current circuit breaker was put into use half a century ago, and it has been brought into the high-tech era through continuous improvement in its structure and breaking capacity. However, its main functions are still imperfect and its flaws include that it is not able to provide protection from a variety of electric shocks that can likely occur to a person from electrical accidents caused by disconnected ground lines (due to loose or broken connections) in a controlled circuit, and by hot ground line or hot neutral line, misconnected neutral lines with the phase lines, misconnected single phase with the two phases, and over-voltage, nor can it provide protection in advance against electric shocks without contacting electric current.

Protection provided against electric shocks only after contact with an electric current is an incomplete protection because the person is surely to suffer some level of injury, whether it is minor or severe.

Protection against electric shocks without contact with an electric current is an improved protection. Since no electric current passes through the body, no bodily harm is done to the person. Complete protection is certainly an improvement over incomplete protection.

The key to the present invention's intelligent protection against electric shock without contact with an electric current is the digital logic microcontroller that is original to this invention. It consumes little power, is small in size, is easy to install, and is inexpensive to produce. Therefore, compared with similar models of the current residual current circuit breakers in the world, the present invention consumes less power, is no bigger in size and has only a slightly higher manufacturing cost.

The intelligent protection against electric shock without contact with an electric current, that can be caused by various electrical faults such as disconnected ground lines (due to loose or broken connections) in a controlled circuit, hot ground line or hot neutral line, misconnected neutral lines with the phase lines, misconnected single phase with the two phases, and over-voltage (these types of electric faults are referred to hereafter when necessary, as the electric faults caused by "disconnected ground lines, etc."), in a controlled circuit, is a very reliable measure for electrical safety.

The intelligent protection against electric shock without contact with an electric current, that can be caused by various electrical faults such as disconnected ground lines (due to loose or broken connections) in a controlled circuit, hot ground line or hot neutral line, misconnected neutral lines with the phase lines, misconnected single phase with the two phases, and over-voltage (these types of electric faults are referred to hereafter when necessary, as the electric faults caused by "disconnected ground lines, etc."), in a controlled circuit, is a very reliable measure for electrical safety.

This is because even if a residual current circuit breaker (of the type currently used around the world) is installed, it can not replace the protection provided by a properly connected ground line. Without the protection of the properly connected ground lines, the circuit breaker only provides protection after contact with an electric current, or it may not provide any protection even after an electric shock. Either scenario is unsafe.

Providing protection only after contact with an electric current will cause bodily harm. Contact with a 30mA electric current is not safe. Depending on the environment (e.g. a wet environment or an environment that is likely to lead to secondary injuries) an electric current of as little as 10-25mA can lead to minor, sever or even fatal injuries depending on the whether the person is young, a fit adult, old, a child, pregnant, sick or disabled. This is because at the moment of contact with an electrical current and experiencing an electric shock, most people panic. If the victim(s) can not help themselves away from contact with the electric current, and if the leakage current has not reached the set range, the residual current circuit breaker cannot provide open circuit protection. Thus, the electrical current continues to flow through the body and causes a fatal electrocution.

According to data analysis conducted by the relevant institutions in America, Japan and China, most electric shock fatalities and electrical fire accidents are the result of disconnected ground lines (due to loose or broken connections), hot ground lines or hot neutral lines, misconnected neutral lines with the phase lines, misconnected single phase with the two phases, and over-voltage. These electrical accidents are the protection "blind spots" of the residual current circuit breakers currently in use today, which do not provide protection or provide protection only after contact with an electric current and an electric shock. That is why the developed countries such as America and Japan began to use current operational type residual current circuit breaker in the 1960s. However, there are still numerous electric shock fatalities and electrical fire accidents that occur each year.

While grounding protection is essential, the current technology can not guarantee the effectiveness of the protection devices via connecting ground lines.

Therefore, only by designing an electric shock prevention residual current circuit breaker that can provide intelligent protection against the electrical faults caused by the "disconnected ground line, etc.," can we ensure effectiveness of grounding protection in a controlled circuit. Such a design would greatly contribute to global electrical safety, the prevention of electric shock fatalities and injuries, and electrical fires.

### SUMMARY

The main object of the present invention is to provide a no-current-contact electric shock prevention residual current circuit breaker that is controlled by a digital logic microcontroller, that in addition to providing current leakage protection, overcurrent protection, and short circuit protection, it provides an intelligent protection against electric shocks without contact with an electric current, caused by various electrical faults such as disconnected ground lines (due to loose or broken connections),a hot ground line or hot neutral line, misconnected neutral lines with the phase lines, misconnected single phase with the two phases, and over-voltage. It can also provide protection in advance that can virtually eliminate indirect electric shocks and fires.

Another object of the present invention is to design a no-current-contact electric shock prevention residual current circuit breaker that provides a new intelligent protection that can provide protection before contact with an electric current, and can provide protection in advance, thus eliminating the flaws of the residual current circuit breakers in use in the world today. These flaws include providing protection only after contact with an electric current and suffering an electric shock, or unable to provide protection against electrical accidents caused by "disconnected ground lines, etc." in a controlled circuit system.

Yet another object is to provide a new generation of no-current-contact electric shock prevention residual current circuit breaker that consume less power, are no larger in size and cost only slightly more than the residual current circuit breakers currently in use in the world.

### TECHNICAL SCHEME OF THE INVENTION

The present invention comprises mainly: a digital logic microcontroller A, fault sensor circuit B, electromagnetic trip circuit C, low voltage supply circuit D, ground line circuit PE, and a set of corresponding members F, and others.

Among Which:
1. Digital logic microcontroller A includes first tier circuit a1; second tier circuit a2; logic processing circuit a3; precursor circuit a4; and digital generating circuit a5.
2. Fault sensor circuit B includes leakage sensor circuit b1; sensor circuit b2 of "disconnected ground line, etc. "
3. The electromagnetic trip circuit C includes rear driving circuit c1; and electromagnetic trip device c2.
4. Low voltage supply circuit D includes voltage reducing capacitor C1, filter capacitor C2, diode D1, diode D2 and voltage-regulator tube Dz.
5. The ground line circuit PE includes a metal plate PE terminal at the bottom of the housing; and connecting wires.
6. A set of corresponding members F includes close or open circuit assembly F1; the input terminal F2; output terminal F3; switch handle F4; overcurrent and short circuit trip device F5; dynamic contact F6; static contact F7; avoiding arc device F8; leakage experimental circuit F9; and housing F10.

The operating principle and diagrams of sectional circuits and their connections in the present invention are described below in the preferred embodiments of practice of the invention.

### BRIEF DESCRIPTION OF THE DRAWINGS

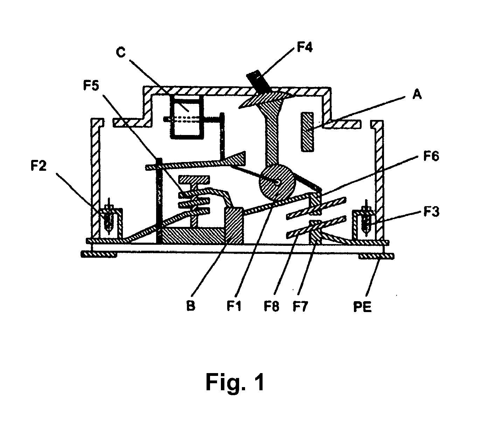

FIG. 1 illustrates a sectional side view of the present invention.

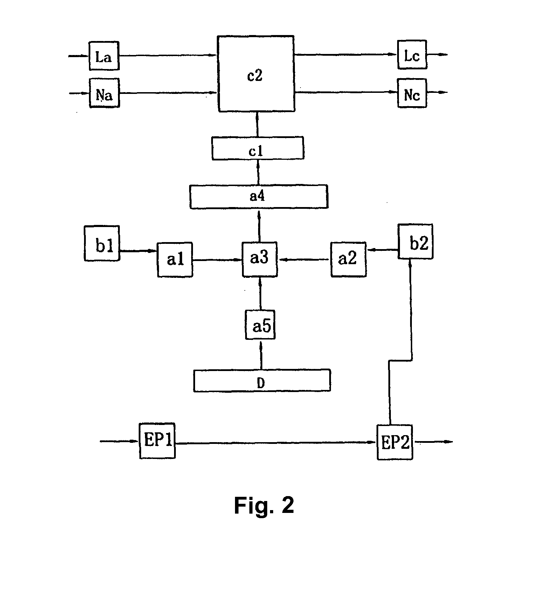

FIG. 2 illustrates an electrical schematic diagram showing the present invention.

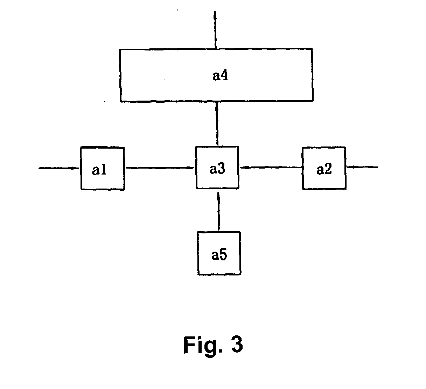

FIG. 3 illustrates a schematic diagram showing the internal structure of digital logic microcontroller A of the present invention.
FIG. 4 illustrates an electrical schematic diagram of the first preferred embodiment of the present invention.
FIG. 5 illustrates an electrical schematic diagram of the second preferred embodiment of the present invention.
FIG. 6 illustrates an electrical schematic diagram of the third preferred embodiment of the present invention.
FIG. 7 illustrates an electrical schematic diagram of the fourth preferred embodiment of the present invention.

### DETAILED DESCRIPTION OF THE INVENTION

### Preferred Embodiment 1:

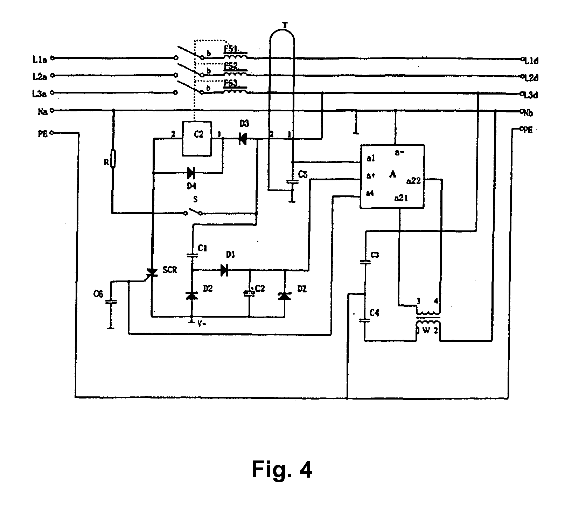

The preferred embodiment is a three-phase electronic no-current-contact electric shock prevention residual current circuit breaker (five lines: L1+L2+L3+N+PE) and its electrical schematic diagram is shown in FIG 4.

The preferred embodiment comprises digital logic microcontroller A, fault sensor circuit B, electromagnetic trip circuit C, low voltage supply C, low voltage supply circuit D, ground line circuit PE, and a set of corresponding members F.

The circuit components and connections of the present preferred embodiment are as follows:
1. low voltage supply circuit D comprised voltage reducing capacitor C1, filter capacitor C2, diode D1, diode D2, voltage-regulator tube Dz, in which one end of C1 is connected to the phase line L3d, the other end of C1 is parallel connected with the anode of D1 and the cathode of D2; the cathode of D1 and the anode of C2, and the cathode of Dz are parallel connected to become low-voltage power supply V+; the anode of D2, the cathode of C2, and the anode of Dz are parallel connected to become low-voltage power supply V-; V+ is connected to a+ of digital logic microcontroller A, and V- is connected with a- of A; V- is also a shared " - "electrode which is in turn connected with neutral line Nb.
2. Leakage sensor circuit b1 in fault sensor circuit B comprises zero-sequence current transformer T and capacitor c5, in which the three-phase lines L1b, L2b, L3b and neutral line Nb go through the middle hole of T electromagnetic winding, the winding end 1 of T is connected with input terminal a1, T winding end 2 is connected to the shared "-" electrode, one end of C5 is connected with T winding end 1 and the other end is connected to T winding end 2.
3. Leakage sensor circuit b2 for disconnected ground lines, etc. in fault sensor circuit B comprises coupler w, capacitor C3 and capacitor C4, and in which one end of C3 is connected with output Ld of the power source phase lines, the other end of C3 is first parallel connected with C4 and then connected with end 1 of w, and end 2 of w is connected with Nd of the power supply neutral lines, and the end 3 of w is connected with the input end a21 of the second tier circuit a2 and end 4 of w is connected with input end a22.
4. Rear driving circuit c1 comprises thyristor SCR and capacitor C6, in which SCR anode is connected with end 1 of c2, SCR cathode is connected with the shared "-" electrode, and SCR control gate is connected with the output of precursor circuit a4, one end of C6 is connected with SCR control gate and the other end of C6 is connected with the shared "-" electrode.
5. Electromagnetic trip device c2 includes diode D3 and follow-current diode D4, and in which, end 2 of c2 is connected with the cathode of D3, the anode of D3 is connected with the L3d of the phase lines, end 1 of c2 is connected to SCR anode, the cathode D4 is connected with end 2 of c2, and the anode of D4 is connected with end 1 of c2.
6. Overcurrent and short circuit trip device F5 comprises F51, F52 and F53, and in which one end of F51 is connected with L1b of the phase lines, the other end of the F51 is connected with L1c of the phase lines, one end of F52 is connected with L2b of the phase lines, and the other end of F52 is connected to L2c of the phase lines, one end of F53 is connected with L3b of F53 and the other end of F53 is connected to L3c of the phase lines.
7. One end of ground line PE is led out from the junction of C3 and C4 of sensor circuit b2 for disconnected ground lines, etc., the other end is connected with metal plate PE terminal at the bottom of the housing. When first in use, the input of PE is fixed to the ground line PEN under the "TN-C-S" electricity supply system, or is fixed to the grounded ground line under the "T-T" electricity supply system, or is fixed to the qualified ground lines that are repeatedly grounded, and the output is fixed to the metal housing or the metal frame of a controlled electric equipment.
8. Leakage testing circuit F9 comprises resistor R, leakage testing switch S, and in which one end of R is connected with L3b of the phase lines and the other end is connected to one end of the switch S, and the other end of switch S is connected with Nb of the neutral line.
9. The input terminals F21, F22, F23 and F24 are respectively connected with L1a of the phase line, L2a of the phase line, and Na of the neutral line.

The output terminals F31, F32, F33, and F34 are respectively connected with L1d of the phase line, L2d of the phase line and Nb of the neutral line.

### Operating Principle of the Preferred Embodiment 1

When in use, first pull the switch handle F4 to the"on"position. If there is no current leakage such as a loop current leakage, or electrical faults caused by the "disconnected ground line, etc."in a controlled circuit at the time, dynamic contact F6 is pressed tightly to connect static contact F7 to allow the power supply line to transmit electricity normally in the controlled circuit.

Example 1-1, when a loop current leakage in a controlled circuit occurs, the device trips and disconnects via zero-sequence current transformer T which comprises of leakage sensor circuit b1, and from b1 to first tier circuit a1, to logic processing circuits a3, to precursor circuit a4, rear driving circuit c1, and finally to electromagnetic trip device c2. This entire operation takes less than 0.1 seconds. Thus, within 0.1 seconds of when an electric fault occurs, the device can automatically eliminate in advance current leakage accidents that may cause bodily injury or death by electric shock.

Example 1-2, in the case of electric faults caused by a disconnected ground line in a controlled circuit: Under normal conditions, there is no electric potential difference or very little difference between ground line PE and neutral line N, and between the"earth,"when the ground line PE is connected with ground line PEN under the "TN-C-S" electricity supply system, or it is connected with a ground line under the "T-T" electricity supply system, or is connected with the qualified ground line that is repeatedly grounded. When the electric faults caused by a disconnected ground line occur, the ground line is suspended, which leads to the high electric voltage in coupler w of sensor circuit b2 of the disconnected ground line and others. This high electric voltage couples to second tier circuit a2, to logic processing circuits a3, then to precursor circuit a4, to rear driving circuit c1, and finally to electromagnetic trip device c2, and it sets off the device to trip and disconnect. The entire operation takes 0.2 to 1 second. This time is adjustable. Thus, within 0.2 to 1 second of when an electric fault occurs, the device can automatically eliminate in advance the electric accidents resulting from the disconnected ground line that may cause bodily injury or death by electric shock.

Example 1-3, in case of electric faults caused by a disconnected ground line in a controlled circuit: Under normal conditions, there is no electric potential difference or very little difference between ground line PE and neutral line N, and between"earth."However, when repeated short circuits occur between the phase lines and the neutral lines (under the TN electricity supply system), or when relatively large electric leakage occurs in other electric circuits, electric faults occur (it is quite dangerous because the housing of the electric equipment becomes hot under the TN electricity supply system). There is a high electric voltage between the ground lines PE, neutral line N and "earth" when an electric fault occurs due to a hot ground line. This high voltage also leads to a high electric voltage in coupler w of sensor circuit b2 of the disconnected ground line and others. The high electric voltage couples to second tier circuit a2, to logic processing circuit a3, then to precursor circuit a4, to rear driving circuit c1, and finally to electromagnetic trip device c2 which trips and disconnect. The entire operation completes within 0.2 to 1 second and the time can be adjusted. Thus, within 0.2 to 1 second of when an electric fault occurs, the device can automatically eliminate in advance the electric accidents resulting from a hot ground line that may cause bodily injury or death by electric shock.

Example 1-4, In case of electric faults caused by a hot neutral line: Under normal conditions, there is no electric potential difference or very little difference between the neutral line N and the ground line PE, and between "earth." However, a hot neutral line electric fault can occur if the neutral line is misconnected with the phase lines, or one phase is missing from three phases. Such faults lead to an electric potential difference between the neutral line N, the ground line PE and "earth", which can cause bodily injury and death by electric shock (it is quite dangerous because the housing of the electric equipment becomes hot under the TN electric system).

This high voltage also leads to a high electric voltage in the coupler w of the sensor circuit b2 of the disconnected ground line, etc. The high electric voltage couples to the second tier circuit a2, to the logic processing circuit a3, then to the precursor circuit a4, to the rear driving circuit c1, and finally to the electromagnetic trip device c2 which trips and disconnect. The entire operation completes within 0.2 to 1 second and the time can be adjusted. Thus, within 0.2 to 1 second of when an electric fault occurs, the device can automatically eliminate in advance the electric accidents resulting from a hot neutral line that may cause bodily injury or death by electric shock.

Example 1-5, in the case of faults caused by a misconnect of the neutral line with the phase lines in a controlled circuit; it operates similarly as in the case of hot neutral line faults. Within 0.2 to 1 second of when an electric fault occurs, the device also can automatically eliminate in advance the electric accidents resulting from a hot neutral line that may cause bodily injury or death by electric shock.

Example 1-6, in the case of faults caused by a single phase misconnect with the two phases under a controlled circuit, it operates similarly as in the case of hot neutral line faults. Such electrical faults generate nearly twice as much overvoltage which can very likely burn up controlled electrical equipment and cause fire within a few seconds. Within 0.2 to 1 second of when such electric faults occur, the present invention can automatically eliminate in advance the severe electric accidents that may cause bodily injury or deaths by electric shock and electrical fires.

Example 1-7, in the case of electric faults caused by the overcurrent of the single-phase, two-phase or three-phase, and short circuit etc, related trip devices F51, F52 and F53 and others generate relatively strong electromagnetic attracting (repelling) force to provide protection by tripping and disconnecting the electrical system.

### Preferred Embodiment 2:

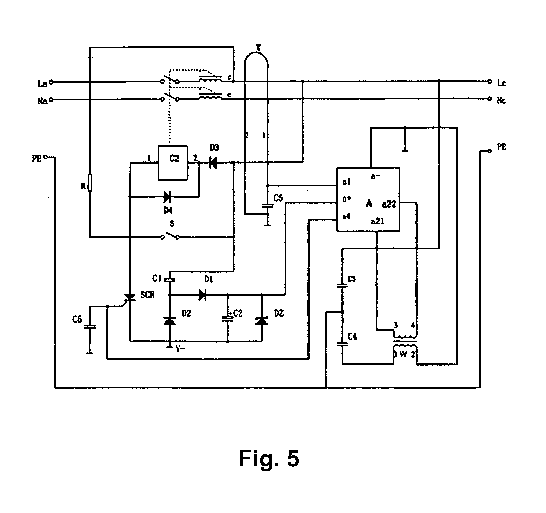

The present preferred embodiment is a single-phase electronic no-current-contact electric shock prevention residual current circuit breaker (three lines: L+N+PE). Its electrical schematic diagram is shown in FIG 5.

The device of the present preferred embodiment comprises the following components: digital logic microcontroller A, fault sensor circuit B, electromagnetic trip circuit C, low voltage supply circuit B, ground line circuit PE and a set of corresponding members F and others.

The electric circuit diagram of the present preferred embodiment and its connections are as follows:
1. Low voltage supply circuit D comprises voltage reducing capacitor C1, filter capacitor C2, diode D1, diode D2, voltage-regulator tube Dz; in which, one end of C1 is connected with phase lines Ld and the other end is parallel connected with the anode of D 1 and the cathode of D2; the cathode of D1, the anode of C2 and the cathode of Dz are parallel connected to become low-voltage power supply V+; the anode of D2, the cathode of C2, and the anode of Dz are parallel connected to become the low-voltage power supply V-; V+ is connected with a+ of digital logic microcontroller A, and V- is connected with a-ofA; V- is the shared "-"electrode and it is then connected with neutral line Nd.
2. Leakage sensor circuit b1 in fault sensor circuit B comprises zero-sequence current transformer T, capacitor c5, and others; in which, phase line Lc and neutral line Nc go through the middle hole of T electromagnetic winding, T winding end 1 is connected with input terminal a1 of first tier circuit, T winding end 2 is connected to the shared " - " electrode, and one end of C5 is connected with T winding end 1 and the other end of C5 is connected to T winding end 2.
3. Sensor circuit b2 of the disconnected ground line in fault sensor circuit B comprises coupler w, capacitor C3 and capacitor C4 and others; in which, one end of C3 is connected with power supply output end Ld, the other end of C3 is then connected to end 1 of w, end 2 of w is connected to power supply neutral line Nd, end 3 of w is connected to input end a21 of second tier circuit a2, and end 4 of w is connected to input a22.
4. Rear driving circuit c1 comprises tryristor SCR, capacitor C6 and others; in which the anode of SCR is connected with end 1 of c2, the cathode of SCR is connected to the shared "-" electrode, and the control gate of SCR is connected with output a4 of the precursor circuit, one end of C6 is connected with the control gate of SCR and the other end of C6 is connected with the shared " - "electrode.
5. Electromagnetic trip device c2 includes diode D3, follow-current diode D4; in which end 2 of c2 is connected to the cathode of D3, the anode of D3 is connected with Ld end of the phase line, the cathode of D4 is connected with end 2 of c2 and the anode of D4 is connected with end 1 of c2.
6. Overcurrent and short circuit trip device F5 includes F51 and F52; in which, one end of F51 is connected with L1b end of the phase line and the other end of F51 is connected with L1c of the phase line, and one end of F52 is connected to Nb end of the neutral line and the other end of F52 is connected with Nc end of the neutral line.
7. One end of ground line PE is led out from the junction of C3 and C4 in sensor circuit b2 of the disconnected ground line, the other end of PE is connected with the metal plate PE terminal at the bottom of the housing. When first in use, the input end of PE is fixed to ground line PEN under the "TN-C-S" electricity supply system, or is fixed to the grounded ground line under the "T-T" electricity supply system, or is fixed to qualified ground line that is repeatedly grounded, and the output end is fixed to the metal housing or metal frame of the controlled electric equipment.
8. Leakage testing circuit F9 comprises resistor R, leakage testing switch S and other; in which, one end of R is connected to Lc end of the phase line and the other end of R is connected with one end of switch S, and the other end of switch S is connected to Nd of the neutral line.
9. Input terminals F21 and F22 are connected with La of the phase lines and Na of the neutral line respectively.
10. Output terminals F31 and F32 are parallel connected to Ld of the phase line and Nd of the neutral line.

The operating principle of the preferred embodiment 2 is similar to that of the preferred embodiment 1, therefore it is not described here.

### Preferred Embodiment 3:

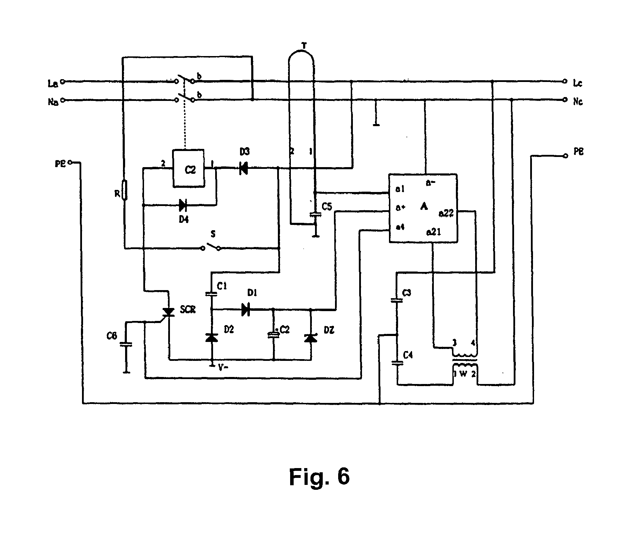

The preferred embodiment is a single-phase electronic leakage current protection device without an electric current contact (three lines: L+N+PE). Its electrical schematic diagram is shown in FIG 6.

The current technology uses the term "residual current circuit breaker" for devices that provide protection against overcurrent and short circuit. Devices that do not have protective functions against overcurrent and short circuit are termed current leakage protection device.

The preferred embodiment does not concurrently provide protection against overcurrent and short circuit, and it is therefore it is named "no-electric-contact electric shock current leakage protection device".

The preferred embodiment does not concurrently provide protection against overcurrent and short circuit, and it is therefore it is named "no-electric-contact electric shock current leakage protection device".

The structural components of the preferred embodiment are as follows:

Digital logic microcontroller A, fault sensor circuit B, electromagnetic trip circuit C, low voltage supply circuit D, ground line circuit PE, a set of corresponding members F and others.

The components and their connections of the preferred embodiment are as follows:
1. Low voltage supply circuit D comprises voltage reducing capacitor C1, filter capacitor C2, diode D1, diode D2, voltage-regulator tube Dz and others; in which, one end of C1 is connected with Lc end of the phase line, and the other end of C1 is parallel connected with the anode of D1, the cathode of D2; the cathode of D1 is parallel connected with the anode of C2, the cathode of Dz to become the low-voltage power supply V+; the anode of D2 is parallel connected with the cathode of C2 and the anode of Dz to become low-voltage power supply V-; V+ is connected with a1 of digital logic microcontroller A, and V- is connected with a- of A; V- is also the shared " - "end, and it is then connected with Nc of the neutral line.
2. Leakage sensor circuit b1 in fault sensor circuit B comprises the zero-sequence current transformer T, capacitor c5 and others; in which, phase line Lc and neutral line Nb go through the middle hole of T electromagnetic winding, and winding end 1 of T is connected with input terminal a1 of the first tier circuit, T winding end 2 is connected to the shared " - "electrode, and one end of C5 is connected with T winding end 1 and the other end of C5 is connected to T winding end 2.
3. Fault sensor circuit b2 for the disconnected ground line in fault sensor circuit B comprises coupler w, capacitor C3, capacitor C4 and others; in which, one end of C3 is connected to Lc of the power supplying phase line, and the other end of C3 is first connected in series with C4, and then is connected to end 1 of w, and end 2 of w is connected with Nc of the power supplying neutral line; end 3 of w is connected to input terminal a21 of the second tier circuit and end 4 of w is connected to a22.
4. Rear driving circuit c1 comprises thyristor SCR, capacitor C6 and others; in which, the anode of SCR is connected with end 1 of c2, and the cathode of SCR is connected to the shared " - "electrode, the control gate of SCR is connected with output end a4 of the precursor circuit, one end of C6 is connected with the control gate of SCR and the other end of C6 is connected with the shared" - "electrode.
5. Electromagnetic trip device c2 includes diode D3, follow-current diode D4; in which, end 2 of c2 is connected with the cathode of D3, the anode of D3 is connected with Lc of the phase lines, end 1 of c2 is connected with the anode of SCR, the cathode of D4 is connected to end 2 of c2, and the anode of D4 is connected with end 1 of c2.
6. One end of the ground line PE is led out from the junction of C3 and C4 of sensor circuit b2 for the disconnected ground line and others, and the other end of PE is connected to the metal plate PE terminal at the bottom of the housing; when first in use, the input end of PE is fixed to the ground line PEN of the"TN-C-S"electricity supply system, or is fixed to the grounded ground line of the "T-T"electricity supply system, or fixed to the qualified ground line that is repeatedly grounded, and the output end is fixed to the metal housing or metal frame of the controlled electric equipment.
7. Leakage detecting circuit F9 comprises resistor R, leakage testing switch S and others; in which, one end of R is connected to Lc end of the phase line, and the other end of R is connected to one end of switch S, and the other end of switch S is connected to Nc of the neutral line.
8. Input terminals F21 and F22 are connected respectively with La of the phase line and Na of the neutral line; output terminals F31 and F32 are connected respectively with Lc of the phase line and Nc of the neutral line.

The operating principle of the preferred embodiment 3 is similar to that of the preferred embodiment 2, therefore it is not further described here.

### Preferred Embodiment 4:

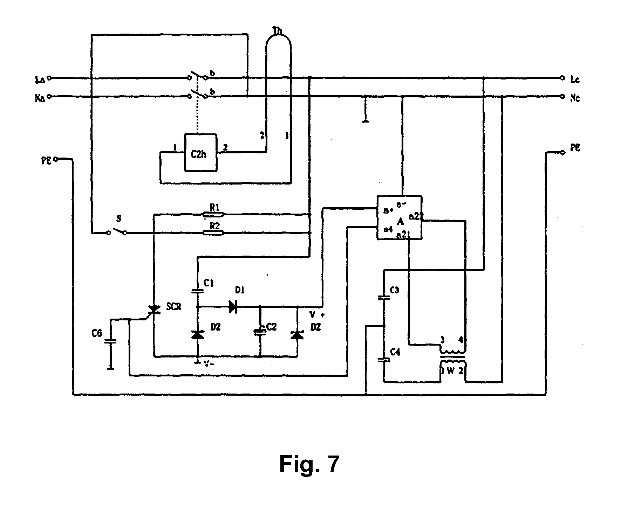

The preferred embodiment is a single-phase electromagnetic no-current-contract electric shock prevention residual current circuit breaker (three lines: L+N+PE). The electrical schematic diagram of the preferred embodiment is shown as FIG 7.

The components and their connections of the preferred embodiment are as follows:
1. Low voltage supply circuit D comprises voltage reducing capacitor C1, filter capacitor C2, diode D1, diode D2, voltage-regulator tube Dz and others; in which, one end of C1 is connected Lc end of the phase line, the other end of C1 is parallel connected with the anode of D1 and the cathode of D2; the cathode of D1 is parallel connected with the anode of C2 and the cathode of Dz to become low-voltage power supply V+; the anode of D2 is parallel connected with the cathode of C2 and the anode of Dz to become low-voltage power supply V-, and V+ is connected with a1 of the digital logic microcontroller A, and V- is connected with a- of A; V- is also a shared" - "electrode and it is then connected with Nc of the neutral line.
2. Leakage sensor circuit b1 comprises electromagnetic zero-sequence current transformer T; in which, Lb of the phase line and Nb of the neutral line go through the middle hole of T electromagnetic winding, and end 1 of T winding is connected to end 1 of electromagnetic type electromagnetic trip device c2, and end 2 of T winding is connected with electromagnetic type electromagnetic trip device c2.
3. Sensor circuit b2 for the disconnected ground line and others comprises coupler w, capacitor C3, capacitor C4 and others; in which, one end of C3 is connected output end Lc of the phase line, the other end is connected in series with C4 first and then is connected with end 1 of w, and end 2 of w is connected with Nc of the power supply neutral line; end 3 of w is connected with input a21 of digital logic microcontroller A, and end 4 of w is connected with input a22 of w.
4. Rear driving circuit c1 comprises thyristor SCR, capacitor C6, current-limiting resistor R1 and others; in which the anode of SCR is connected in series with output Lc of R1 power supply phase line, and the cathode of SCR is connected with the share " - " electrode, the control gate of SCR is connected with output a4 of the precursor circuit, and one end of C6 is connected with the control gate of SCR and the other end of C6 is connected with the shared " - "electrode.
5. The connections of electromagnetic type electromagnetic trip device c2 is described as (2) above.
6. One end of ground line PE is let out from the junction of C3 and C4 of sensor circuit b2 for the disconnected ground line and others, and the other end of PE is connected with the metal plate PE terminal beset at the bottom of housing F10; When first in use, the input of PE is fixed to ground line PEN under the "TN-C-S" electricity supply system, or is fixed to the grounded ground line of the "T-T" electricity supply system, or is fixed to the qualified ground line that is repeatedly grounded, and the output is fixed to the metal housing or metal frame of the controlled electric equipment.
7. Leakage detecting circuit F9 comprise resistor R2, leakage testing switch S and others; in which, one end of R is connected to Lb of the phase line, and the other end of R2 is connected to one end of switch S, and the other end of switch S is connected with Nb of the neutral line.
8. Input terminals F21 and F22 are connected respectively to input La of the phase line and input Na of the neutral line; output terminals F31 and F32 are connected respectively with output Lc of the phase line and output Nc of the neutral line.8. Input terminals F21 and F22 are connected respectively to input La of the phase line and input Na of the neutral line; output terminals F31 and F32 are connected respectively with output Lc of the phase line and output Nc of the neutral line.

The operating principle of the preferred embodiment 4 is similar to that of the preferred embodiment 3. It is therefore not described here.

## Claims

1. A no-current-contact electric shock prevention residual current circuit breaker comprises the following: digital logic microcontroller A, fault sensor circuit B, electromagnetic trip circuit C, low voltage supply circuit D, ground line circuit PE, a set of corresponding members F and others, and its characteristics are as follows: digital logic microcontroller A comprises first tier circuit a1, second tier circuit a2, logic processing circuits a3, precursor circuit a4, digital generating circuit a5 and others; fault sensor circuit B comprises of leakage sensor circuit b1, sensor circuit b2 for the disconnected ground line and others; electromagnetic trip circuit C comprises rear driving circuit c1, electromagnetic trip device c2 and others; low voltage supply circuit D comprises of voltage reducing capacitor C, filter capacitor C, rectifying tube D, voltage-regulator tube Dz and others; ground line circuit PE comprises of metal plate PE at the bottom of the housing, and connecting conductors and others; a set of corresponding members F comprises of close or open circuit assembly F1, input terminal F2, output terminal F3, switch handle F4, overcurrent and short circuit trip device F5, dynamic contact F6, static contact F7, avoiding arc device F8, leakage detecting circuit F9 and housing F10 and others.

2. The characteristics of a no-current-contact electric shock prevention residual current circuit breaker as recited in claim 1 are: the input of first tier circuit a1 in digital logic microcontroller A is connected with leakage sensor circuit b1, the output of first tier circuit a1 is connected with the input end of logic processing circuit a3, the input of second tier circuit a2 is connected with sensor circuit b2 for the disconnected ground line and others, the output of second tier circuit a2 is connected with the input of logic processing circuit a3, the output of logic processing circuit a3 is connected with the input of precursor circuit a4, the output of precursor circuit a4 is connected with the input of rear driving circuit c1, digital generating circuit a5 provides digital signal source for digital logic microcontroller A.

3. Further characteristics of a no-current-contact electric shock prevention residual current circuit breaker as described in claim 1 and claim 2 are as follows: digital logic microcontroller A can be carried out by medium scale or large scale integrated circuits, or carried out by separate electronic components, and furthermore, it can be carried out by increasing or decreasing electronic circuit combinations in accordance with different sensitivities and different amplifications, or it can be carried out by changing the orders of connections in accordance with the electrical schematic diagrams.

4. Further characteristics of a no-current-contact electric shock prevention residual current circuit breaker as described in claim 1 are as follows: leakage sensor circuit b1 of fault sensor circuit B comprises of zero-sequence current transformer T, capacitor c5 and others, and end 1 of T is connected with first tier circuit a1, and end 2 of T is connected with the shared " - "electrode, C5 is parallel connected with end 1 and end 2 of T, and sensor circuit b2 for the disconnected ground line and others comprises capacitor C3, capacitor C4, coupler w and others, one end of C3 is connected with output L of the power supply phase line, and the other end of C3 is connected in series with C4 first and is then connected with end 1 of coupler w, end 2 of w is connected with output N of the powers supply neutral line, end 3 of w is connected with the input a21 of first tier circuit of digital logic microcontroller A, end 4 of w is connected with the junction which is connected in series with the first tier circuit input a22 of digital logic microcontroller A, and capacitors C3 and C4, and it is then connected to ground line PE.

5. Further characteristics of a no-current-contact electric shock prevention residual current circuit breaker as recited in claim 1 or Claim 4 are as follows: coupler w of sensor circuit b2 for the disconnected ground lines and other can be carried out by using optocoupler, and capacitor C3 and capacitor C4 may be carried out by using resistor or inductor.

6. Further characteristics of a no-current-contact electric shock prevention residual current circuit breaker as recited in claim 1 are as follows: rear driving circuit c1 comprises of thyristor SCR, capacitor C6 and others, and the anode of SCR is connected with end 1 of electromagnetic trip device c2, and the cathode of SCR is connected with the shared" - " electrode, the control gate of SCR is connected with the output of precursor circuit a4 of digital logic microcontroller A, one end of capacitor C6 is connected with SCR control electrode and the other end of C6 is connected with the shared " - " electrode, electromagnetic trip device c2 comprises diode D3 and follow-current diode D4, end 2 of electromagnetic trip device c2 is connected with the cathode of D3, and the anode of D3 is connected with output L of the power supply phase line, the cathode of D4 is connected with end 2 of c2 and the anode of D4 is connected with end 1 of c2.

7. Further characteristics of a no-current-contact electric shock prevention residual current circuit breaker as recited in claim 1 and claim 6 are as follows: electronic type electromagnetic trip device c2 can be carried out by electromagnetic type electromagnetic trip device c2h, thus, end 2 of electromagnetic type electromagnetic trip device c2h is connected with end 2 of electromagnetic type zero-sequence current transformer Th, and end 1 of c2h is connected with end 1 of Th, the anode of thyristor SCR of rear driving circuit c1 is connected in series with resistor R1 and is then connected with output L of the power supply phase line, the cathode of SCR is connected with shared " - "electrode, the control gate of SCR is connected with the output of precursor circuit a4 of digital logic microcontroller A, one end of capacitor C6 is connected with the control gate of SCR and the other end is connected with the shared " - "electrode.

8. Further characteristics of a no-current-contact electric shock prevention residual current circuit breaker as recited in claim 1 are as follows: Ground line circuit PE comprises the metal plate PE at the bottom of housing and connecting conductors, among which, one end of PE is connected with the junctions of capacitor C3 and capacitor C4 that is connected in series of sensor circuit b2 for the disconnected ground line and others, and the other end of PE is connected with the metal plate PE terminal at the bottom of the housing; when first in use the input of PE is fixed to ground line PEN under the "TN-C-S" electricity supply system, or is fixed to the grounded ground line under the "T-T" electricity supply system, or is fixed to the qualified ground line that is repeatedly grounded, its output is fixed to the metal housing or metal frame of the controlled electric equipment.

9. Further characteristics of a no-current-contact electric shock prevention residual current circuit breaker as recited in claim 1 are as follows: low voltage supply circuit D comprises voltage reducing capacitor C1, filter capacitor C2, rectifying diode D1 and D2, voltage-regulator diode Dz and others, among which, one end of capacitor C1 is connected with output L of the power supply phase line and the other end of C1 is parallel connected with the anode of D1, the cathode D2, the cathode of D1, the anode of C2 and the cathode of Dz are parallel connected to become low-voltage power supply V+ electrode, while the anode of D2, the cathode of C2 and the anode of Dz are parallel connected with low-voltage power supply V- electrode, and "V+"electrode is connected with "a+"of digital logic microcontroller A while "V-"electrode is connected with "a-"of digital logic microcontroller A, and voltage reducing capacitor C1 of this power supply circuit can be carried out by a reducing resistor, the half-wave rectification which comprises rectifying diodes D1 and D2 can be carried out by bridge-type full-wave rectification, and voltage-regulating diode Dz can be carried out by a three-end voltage-regulator tube.

10. Further characteristics of a no-current-contact electric shock prevention residual current circuit breaker as recited in claim 1 are as follows: if protection against overcurrent and short circuit is needed, a no-current-contact electric shock prevention residual current circuit breaker is equipped with overcurrent and short circuit trip device F5 and avoiding arc device F8, and if protection against overcurrent and short circuit is not needed, a no-current-contact electric shock prevention residual current circuit breaker is not equipped with overcurrent and short circuit trip device F5 and avoiding arc device F8.
